# EUROPEAN PATENT APPLICATION

(11) **EP 2 560 343 A1**
(43) Date of publication of application: **20.02.2013**
(21) Application number: 11859657.6
(22) Date of filing: 05.07.2011
(51) Int. Cl.: H04L 29/08, H04L 29/06

(54) **METHOD, APPARATUS AND SYSTEM FOR DISPLAYING PICTURE**

(71) Applicant: Huawei Technologies Co., Ltd., Shenzhen, Guangdong 518129 (CN)
(72) Inventor: PAN, Haitao, Shenzhen City Guangdong 518129 (CN)
(74) Representative: Pfenning, Meinig & Partner GbR
(86) International application number: PCT/CN2011/076863
(87) International publication number: WO 2012/159315

(57) **Abstract**

The present invention discloses a method, an apparatus, and a system for displaying picture, and relates to the field of communication technologies. The method includes: establishing synchronous browsing sessions with terminals performing synchronous browsing; when receiving, from any of the terminals performing synchronous browsing, a request for clicking any picture, searching for a pre-stored identity allocated to the any picture; and sending the identity of the any picture to the terminals other than the terminal clicking the picture, so that the terminals other than the terminal clicking the any picture extract and display a pre-stored corresponding picture according to the identity of the any picture. According to the present invention, synchronous browsing of a picture between multiple terminals and a designated wireless digital photo frame may be implemented through a digital photo frame server, thereby enriching people's life and enhancing the user experience.

## Description

### FIELD OF THE INVENTION

The present invention relates to the field of communication technologies, and in particular, to a method, an apparatus, and a system for displaying pictures.

### BACKGROUND OF THE INVENTION

As a carrier of people's happy memory, a picture framework has become an indispensable unit in a family. With the continuous development of IT technologies and digital technologies, a wireless digital photo frame has replaced a conventional picture framework for storing pictures and become an indispensable electronic product in a family. With a wireless digital photo frame, people may send pictures to the digital photo frame through multimedia messages, Emails, and computers, so as to transfer and share pictures remotely and wirelessly, thereby significantly enriching people's life. Furthermore, a wireless digital photo frame as an electronic product may be connected to a computer by a data cable, and a PC (Personal Computer, personal computer) software package provided by the manufacturer of the digital photo frame may be installed in the computer. After the computer is connected to the digital photo frame by a USB (Universal Serial BUS, universal serial bus), the digital photo frame may be controlled on the PC by the PC software package, so as to implement the function of synchronously browsing pictures between the computer and the digital photo frame.

In the prior art, a user can only control a digital photo frame locally on a PC to implement synchronous browsing between the PC and the digital photo frame, but remote and cross-regional synchronous browsing of pictures cannot be implemented.

### SUMMARY OF THE INVENTION (AMENDED ACCORDING TO THE CLAIMS)

In order to implement remote and synchronous browsing of pictures, embodiments of the present invention provide a method, an apparatus, and a system for displaying pictures. Technical solutions are as follows:

In one aspect, a method for displaying pictures is provided, including:
establishing synchronous browsing sessions with terminals performing synchronous browsing;
when receiving, from any of the terminals performing synchronous browsing, a request for clicking any picture, searching for a pre-stored identity allocated to the any picture, where the any picture is pre-stored by the terminals performing synchronous browsing; and
sending the identity of the any picture to the terminals other than the terminal clicking the any picture, so that the terminals other than the terminal clicking the any picture extract and display a corresponding picture according to the identity of the picture.

In another aspect, a server is provided, including:
an establishing module, configured to establish synchronous browsing sessions with terminals performing synchronous browsing;
an acquiring module, configured to, when receiving, from any of the terminals performing synchronous browsing, a request for clicking any picture, search for a pre-stored identity allocated to the any picture, where the any picture is pre-stored by the terminals performing synchronous browsing; and
a sending module, configured to send the identity of the any picture to the terminals other than the terminal clicking the any picture, so that the terminals other than the terminal clicking the any picture extract and display a corresponding picture according to the identity of the any picture.

In still another aspect, a terminal is provided, including:
a receiving module, configured to receive a synchronous browsing invitation that is sent by a server according to a request from a terminal intending to establish synchronous browsing;
an establishing module, configured to, after the synchronous browsing invitation is received, enable a general packet radio service GPRS, and establish a synchronous browsing session with the server; and
a picture browsing module, configured to receive an identity of a picture notified by the server, and extract and display a pre-stored picture according to the identity.

In still another aspect, a system for displaying pictures is provided, including: the server and the terminal as described above.

The technical solutions provided by the embodiments of the present invention may implement synchronous browsing of a picture between multiple terminals and a designated wireless digital photo frame through a digital photo frame server, thereby enriching people's life and enhancing the user experience.

### BRIEF DESCRIPTION OF THE DRAWINGS

FIG. 1 is a flowchart of a method for displaying pictures according to an embodiment of the present invention;

FIG. 2 is a flowchart of a method for displaying pictures according to another embodiment of the present invention;

FIG. 3 is an application scenario diagram of a digital photo frame system according to still another embodiment of the present invention;

FIG. 4 is a schematic diagram of a digital photo frame system according to still another embodiment of the present invention;

FIG. 5A and FIG. 5B are a flowchart of a method for acquiring pictures according to still another embodiment of the present invention;

FIG. 6A and FIG. 6B are a flowchart of a method for a PC to initiate synchronous browsing according to still another embodiment of the present invention;

FIG. 7 is a schematic structural diagram of a server according to still another embodiment of the present invention;

FIG. 8 is a schematic structural diagram of a server according to still another embodiment of the present invention;

FIG. 9 is a schematic structural diagram of a terminal according to still another embodiment of the present invention;

FIG. 10 is a schematic structural diagram of a terminal according to still another embodiment of the present invention; and

FIG. 11 is a schematic structural diagram of a system for displaying pictures according to still another embodiment of the present invention.

### DETAILED DESCRIPTION OF THE EMBODIMENTS

To make the objectives, technical solutions, and advantages of the present invention clearer, the embodiments of the present invention are hereinafter described in detail with reference to the accompanying drawings.

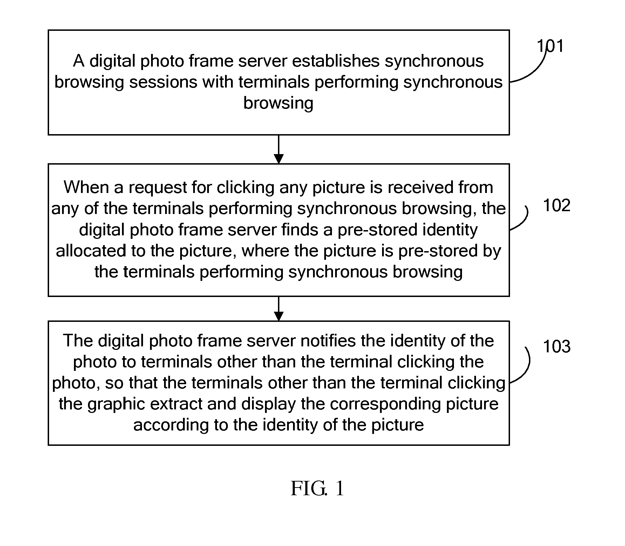

Referring to FIG. 1, an embodiment of the present invention provides a method for displaying pictures, including the following steps:

Step 101: A digital photo frame server establishes synchronous browsing sessions with terminals performing synchronous browsing.

There may be one or more terminals that perform the synchronous browsing. This embodiment is described by taking two terminals as an example, and a first terminal is a PC terminal and a second terminal is a DPF terminal.

Step 102: When receiving, from any of the terminals performing synchronous browsing, a request for clicking any picture, the digital photo frame server finds a pre-stored identity allocated to the picture, where the picture is pre-stored by the terminals performing synchronous browsing.

Step 103: The digital photo frame server notifies the identity of the picture to terminals other than the terminal clicking the picture, so that the terminals other than the terminal clicking the picture extract and display the corresponding picture according to the identity of the picture.

The terminals performing synchronous browsing include the first terminal and the second terminal, and then the digital photo frame server establishing the synchronous browsing sessions with the first terminal and the second terminal includes:
receiving a session connection initiated by the first terminal to establish a session with the first terminal; and
sending a synchronous browsing invitation to the second terminal according to an identity number of the second terminal that is input by the first terminal, to establish a session with the second terminal.

Further, before the digital photo frame server establishes the synchronous browsing sessions with the first terminal and the second terminal, the method also include:
acquiring picture information sent by the first terminal and allocating an identity to the picture;
storing the picture information and the identity of the picture; and
delivering a downloading task notification to the second terminal performing synchronous browsing with the first terminal, so that the second terminal performing synchronous browsing downloads and stores the picture information and the identity of the picture.

Optionally, the acquiring the picture information sent by the first terminal includes:
receiving, from a user of the first terminal, a request for logging in to a portal; and
receiving, through the portal, the picture information uploaded by the first terminal.

The beneficial effect of the method embodiment provided by the present invention is as follows: There is no space limitation, and the synchronous browsing of a picture among multiple terminals may be implemented through a digital photo frame server, thereby enriching people's life and enhancing the user experience.

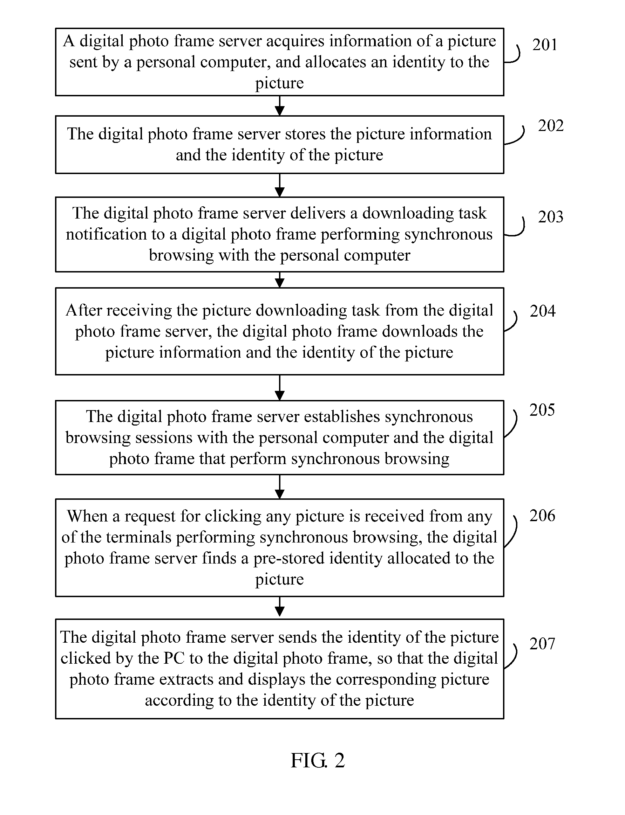

Referring to FIG. 2, an embodiment of the present invention provides a method for displaying picture, including the following steps:

Step 201: A digital photo frame server acquires information of a picture sent by a personal computer, and allocates an identity to the picture.

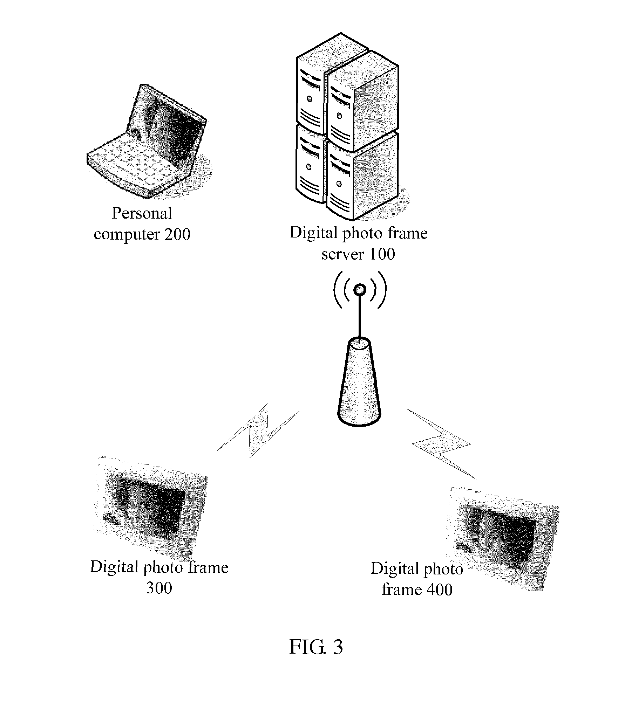

In this embodiment, a terminal may be a computer, a digital photo frame, a smart phone, an interactive TV set top box, or the like, and this embodiment is described by taking digital photo frames and a personal computer as an example. Referring to FIG. 3, this embodiment provides an application scenario diagram of a digital photo frame system, including: a digital photo frame server (Digital Picture Framework Server, DPF Server) 100, a personal computer (Personal Computer, PC) 200, a digital photo frame (Digital Picture Framework, DPF) 300, and a digital photo frame 400. On the basis of pure electronic products of conventional digital photo frames, the digital photo frame server 100 is added. The digital photo frame server 100 may be located in an equipment room of an operator or integrated into an operation and management system of an operator, and is connected to the Internet, a short message gateway, a multimedia message gateway, and a mailbox gateway by an IP network, so as to send short messages, multimedia messages, and mails, or provide other services. The digital photo frame 300 or 400 is connected to a radio network of an operator wirelessly, may receive short messages and multimedia messages, and may access the data network of the operator through the GPRS (General Packet Radio Service, general packet radio service). When the personal computer 200 synchronously browses pictures on the digital photo frame 300 or 400, the digital photo frame server 100 provides a user portal (Portal) for a user to browse pictures, and meanwhile, provides a session management function for synchronous browsing between the personal computer 200 and the digital photo frame 300 or 400; at the time of synchronous browsing between the DPFs, the digital photo frame server provides a session management function for the synchronous browsing.

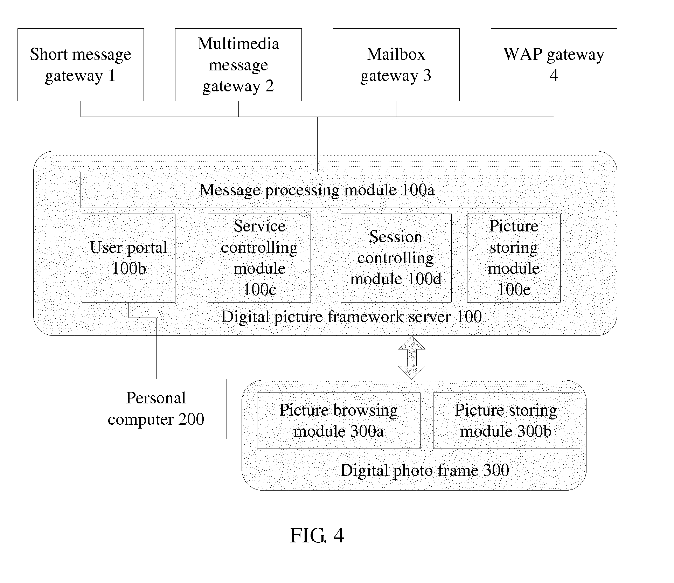

Further, referring to FIG. 4, the implementation of the synchronous browsing of pictures with the digital photo frames involves the digital photo frame server 100, the personal computer 200, the digital photo frame 300 or 400 (not shown), and external network elements. The external network elements include a short message gateway 1, a multimedia message gateway 2, a mailbox gateway 3, and a WAP gateway 4. The short message gateway 1 is configured to send short message notifications to the digital photo frames, the multimedia message gateway 2 is configured to send multimedia messages to the digital photo frames, the mailbox gateway 3 is configured to receive external mailboxes, and the WAP gateway 4 is configured to send pictures to and receive pictures from terminals.

Preferably, referring to FIG. 4, the digital photo frame server includes a message processing module 100a, a user portal 100b, a service controlling module 100c, a session controlling module 100d, and a picture storing module 100e. The message processing module 100a is responsible for sending short messages, multimedia messages, mail messages and WAP access messages to the digital photo frame 300, and is a relay station for message sessions between the digital photo frame 300 and the digital photo frame server 100. The user portal 100b may be accessed directly by a user through the personal computer 200. Through the user Portal 100b, local pictures on the personal computer 200 may be uploaded to the digital photo frame server 100 and may be synchronized to the digital photo frame 300 or 400; meanwhile, the synchronous browsing of pictures with a designated digital photo frame may be implemented by the user portal 100b. The service controlling module 100c is responsible for the uploading and delivery of pictures by a user through the personal computer 200, and for uploading multimedia message pictures received by the digital photo frame 300 to the digital photo frame server 100. The session controlling module 100d is a core module for implementing picture browsing, is responsible for receiving, from the personal computer 200 or the digital photo frame 300, a request for synchronous browsing of pictures, and creating a session for the synchronous browsing of pictures and instructing an invited party to join the synchronous browsing. The picture storing module 100e is responsible for storing all pictures uploaded by a user or sent through MMS (multimedia messaging service, multimedia messaging service) by a user, and analyzing IDs of the pictures, so that the same pictures on all digital photo frames have the same picture IDs. The digital photo frame 300 or 400 includes a picture browsing module 300a and a picture storing module 300b. The picture browsing module 300a completes the browsing and playing of pictures stored on the digital photo frame 300 or 400, and plays the corresponding picture according to the identity of the picture in communication after a synchronous browsing connection is established; and the picture storing module 300b is configured to store all pictures on the local terminal, and store the pictures according to the picture identities that are allocated by the digital photo frame server.

In this embodiment, the digital photo frame server 100 acquiring the picture information sent by the digital photo frame 300 includes: receiving, from a user of a digital photo frame, a request for logging in to the user portal 100b, and receiving, through the user portal 100b, the picture information uploaded by the digital photo frame 300, or receiving the picture information sent by the digital photo frame 300 through a multimedia message. The method for acquiring the picture information in this embodiment includes but is not limited to the foregoing two methods, and this embodiment imposes no specific limitation thereto. Further, in this embodiment, the digital photo frame server generates a corresponding identity for each received picture.

Step 202: The digital photo frame server stores the picture information and the identity of the picture.

In this embodiment, a photo is a form of representation of a picture, and this embodiment is described by taking the photo as an example. When generating the identities for the received photos, the digital photo frame server stores the photos uploaded by a user.

Step 203: The digital photo frame server delivers a downloading task notification to a digital photo frame performing synchronous browsing with the personal computer.

When storing the photos, the digital photo frame server instructs the digital photo frame, which intends to perform the synchronous browsing with the personal computer that uploads the photos, to download the photos. Specifically, the notification for a photo downloading task may be sent to the digital photo frame by means of a binary short message via a short message gateway.

Step 204: After receiving the photo downloading task from the digital photo frame server, the digital photo frame downloads the photo information and the identity of the photo.

Specifically, after receiving the binary short message for the photo downloading task, the digital photo frame actively establishes a data connection with the digital photo frame server; the digital photo frame server responds with the detailed information of the photo (some descriptions about the photo, such as the size and format of the photo) and the identity of the photo; the digital photo frame downloads, according to the identity of the photo, the corresponding photo from the photos stored by the digital photo frame server, and stores the photo together with the identity of the photo into the storage of the digital photo frame, so as to subsequently implement synchronous browsing.

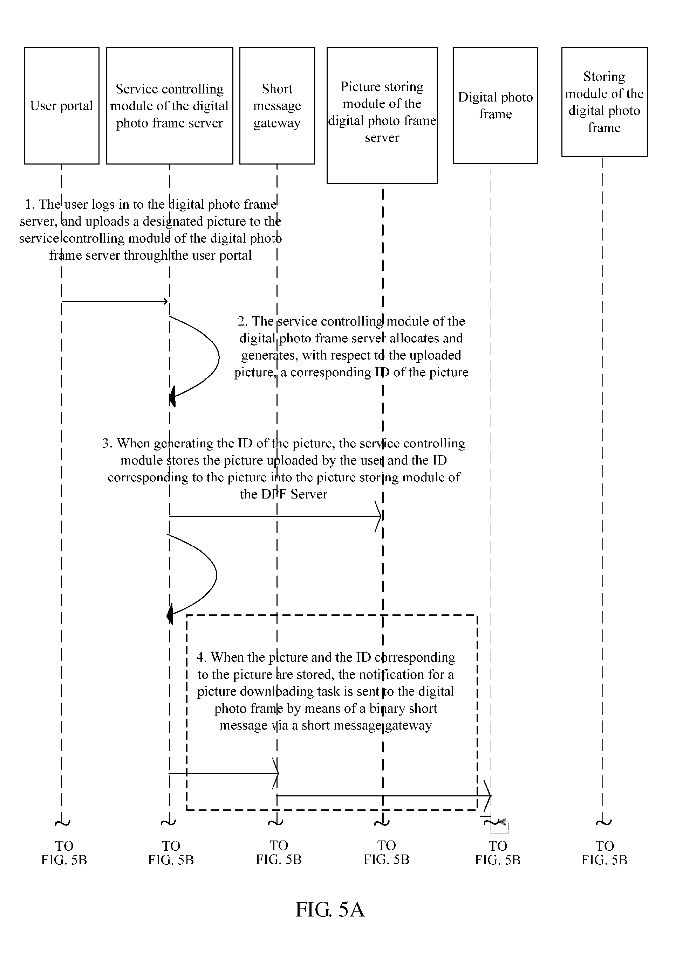

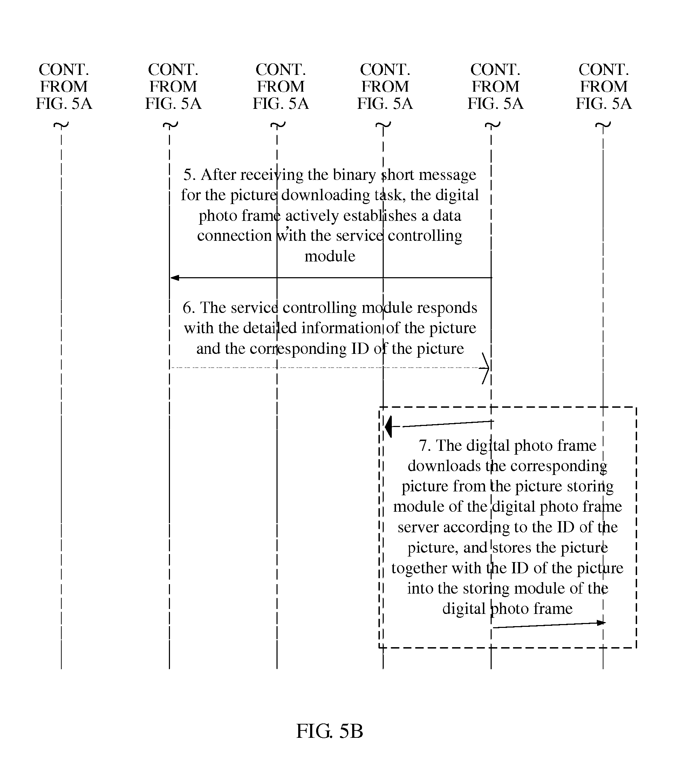

Further, in order to make persons skilled in the art better understand the method for uploading the photo in this embodiment, based on the system architecture in FIG. 4 and referring to FIG. 5A and FIG. 5B, this embodiment provides a method for uploading photo information through a portal. The method includes the following:

1. A user logs in to the digital photo frame server, and uploads a designated photo to the service controlling module of the digital photo frame server through a user portal.

2. The service controlling module of the digital photo frame server allocates and generates, with respect to the uploaded photo, a corresponding identity of the photo.

3. When generating the identity of the photo, the service controlling module stores the photo uploaded by the user and the identity corresponding to the photo into the picture storing module of the digital photo frame server.

4. When the photo and the identity corresponding to the photo are stored, the notification for a photo downloading task is sent to the digital photo frame by means of a binary short message via a short message gateway.

5. After receiving the binary short message for the photo downloading task, the digital photo frame actively establishes a data connection with the service controlling module.

6. The service controlling module responds with the photo information and the corresponding identity of the photo.

7. The digital photo frame downloads the corresponding photo from the picture storing module of the digital photo frame server according to the identity of the photo, and stores the photo together with the identity of the photo into the storing module of the digital photo frame.

Step 205: The digital photo frame server establishes synchronous browsing sessions with the personal computer and the digital photo frame that perform synchronous browsing.

In this embodiment, a digital photo frame establishes a synchronous browsing session with the digital photo frame server, thereby implementing the synchronous displaying of the photo. The number of digital photo frames performing synchronous browsing of photo with the personal computer may be larger than or equal to one, that is, co-browsing by multiple terminals may be implemented.

The digital photo frame server establishing a synchronous browsing session with each of the personal computer and the digital photo frame that perform the synchronous browsing includes: The digital photo frame server receives a session connection initiated by the PC and establishes a session with the personal computer; and sends a synchronous browsing invitation to the digital photo frame according to the digital photo frame's number that is input by the PC and establishes a session with the digital photo frame.

When the personal computer initiates a request, identity number of the digital photo frame is input, and the digital photo frame server may find, according to the identity number, the digital photo frame intending to perform the synchronous browsing, and establish a session connection with the digital photo frames. The session connection may be established through TCP or UDP.

Step 206: When receiving, from any of terminals performing synchronous browsing, a request for clicking any photo, the digital photo frame server finds a pre-stored identity allocated to the any photo.

In this embodiment, after the digital photo frame server establishes session connections with the personal computer and the digital photo frame, any one of the personal computer and the digital photo frame that perform the synchronous browsing may click and browse a photo. Because the digital photo frame server allocates an identity to the photo when the photo is uploaded, the digital photo frame server finds the identity of the browsed photo when any terminal performs the operation.

Step 207: The digital photo frame server sends the identity of the photo clicked by the personal computer to the digital photo frame, so that the digital photo frame extracts and displays the corresponding photo according to the identity of the photo.

In this embodiment, the personal computer and the digital photo frame pre-store the same photo and the identity information corresponding to the photo, and when receiving the photo identity notified by the digital photo frame server, find, according to the identity of the photo, the photo corresponding to the identity in the stored photos, and display the photo, thereby implementing co-browsing of the same photo by multiple terminals and increasing exchange between users of the terminals.

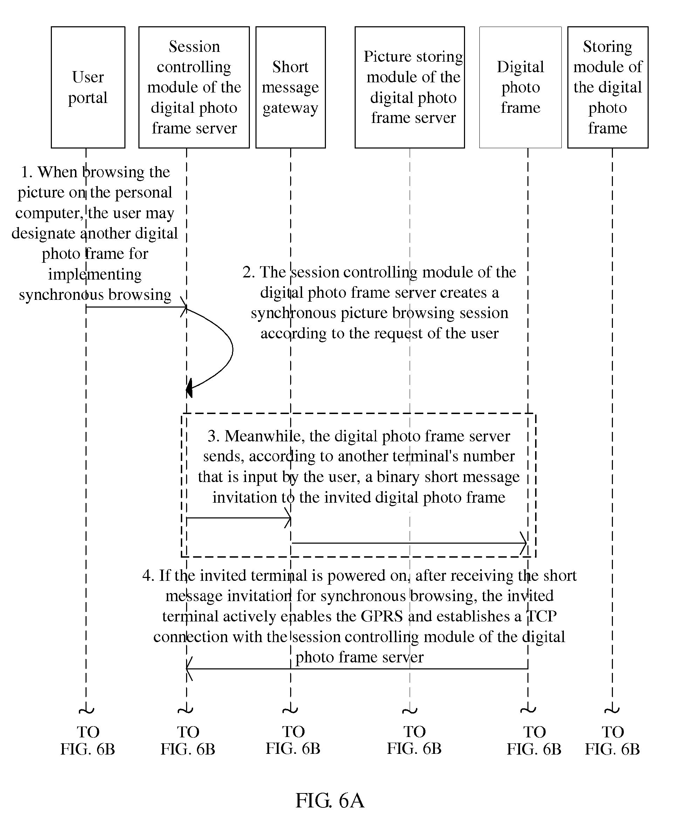

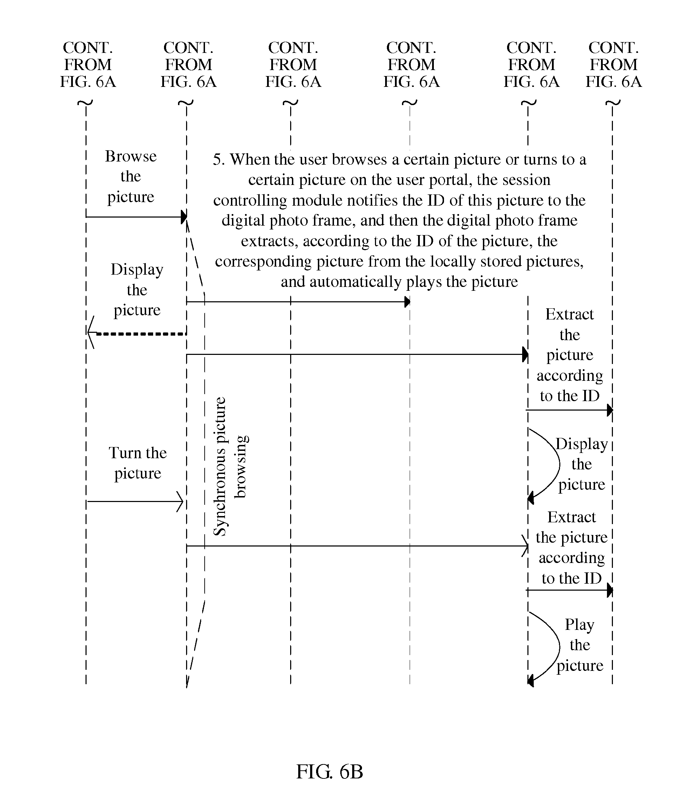

Further, in order to make persons skilled in the art better understand the method for multiple terminals to co-browse the picture in this embodiment, based on the system architecture in FIG. 4 and referring to FIG. 6A and FIG. 6B, this embodiment provides a method for the personal computer to initiate the synchronous browsing of a photo. The method includes the following steps:

1. When browsing a photo on the personal computer, a user may designate another digital photo frame for implementing synchronous browsing.

2. The session controlling module of the digital photo frame server creates a synchronous photo browsing session according to the request of the user.

3. Meanwhile, the digital photo frame server sends, according to another terminal's number (namely, the identity of the terminal) that is input by the user, a binary invitation short message to an invited digital photo frame.

4. If the invited terminal is powered on, after receiving the invitation short message for synchronous browsing, the invited terminal actively enables the GPRS and establishes a TCP connection with the session controlling module of the digital photo frame server.

After the digital photo frame establishes the TCP connection with the session controlling module of the digital photo frame server, the synchronous browsing of the photo may be performed under the control of the session controlling module.

5. When the user browses a certain photo or turns to a certain photo on a user portal, the session controlling module notifies the ID of this photo to the digital photo frame, and then the digital photo frame extracts, according to the ID of the photo, the corresponding photo from the locally stored photos, and automatically plays the photo.

When the user turns to a next photo, the synchronous photo browsing process is repeated, to implement the synchronous browsing of the photo. The invited party may be expanded to multiple terminals, to implement synchronous browsing on multiple screens simultaneously, and after the synchronous photo browsing session is established, any of the invited party may turn to a photo, and other invited parties automatically play the photo according to the ID of the photo.

Based on the system architecture in FIG. 4, this embodiment provides a method for initiating synchronous photo browsing between multiple terminals. When browsing a photo on a terminal A, a user may designate a terminal B for synchronous browsing. The synchronous browsing between multiple terminals depends only on the terminals and no longer depends on the computer, so scenario applications are more extensive. Specifically, the method includes the following steps:

1. The terminal A actively establishes a TCP connection with the session controlling module of the digital photo frame server.

2. The session controlling module of the digital photo frame server creates a synchronous photo browsing session according to the request of the terminal A.

3. Meanwhile, the digital photo frame server sends a binary invitation short message to the invited terminal B according to the number input by the user.

4. If the invited terminal is powered on, after receiving the invitation short message for synchronous browsing, the invited terminal actively enables the GPRS and establishes a TCP connection with the session controlling module of the digital photo frame server.

After the terminal A and the terminal B each establish the TCP connection with the session controlling module of the digital photo frame server, the synchronous browsing of the photo may be performed under the control of the session controlling module.

5. When the user browses a certain photo or turns to a certain photo on the terminal A, the session controlling module notifies the ID of this photo to the terminal B, and then the terminal B extracts, according to the ID of the photo, the corresponding photo from the locally stored photos, and automatically plays the photo.

When the user turns to a next photo, the synchronous photo browsing process is repeated, to implement the synchronous browsing of the photo. The invited party may be expanded to multiple terminals, to implement synchronous browsing on multiple screens simultaneously, and after the synchronous photo browsing session is established, any of the invited party may turn to a photo, and other invited parties automatically play the photo according to the ID of the photo.

The beneficial effect of the method embodiment provided by the present invention is as follows: The synchronous browsing of the photo between multiple terminals and a designated wireless digital photo frame may be implemented through a digital photo frame server, which not only expands the forms of applications of the wireless digital photo frame, but also enriches people's life and enhances the user experience.

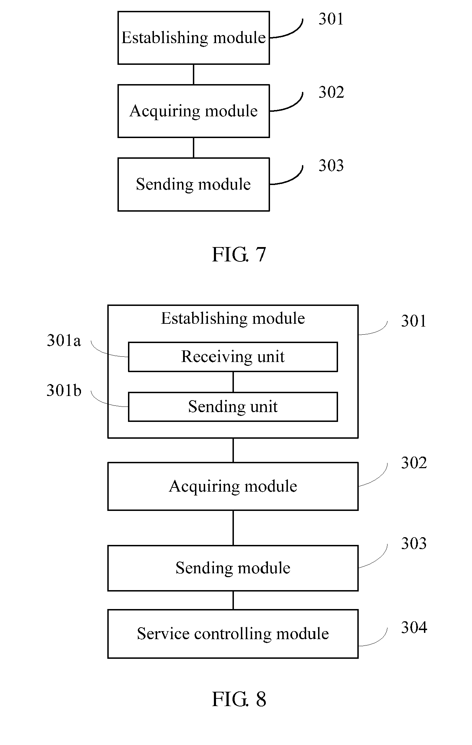

Referring to FIG. 7, an embodiment of the present invention also provides a server, including: an establishing module 301, an acquiring module 302, and a sending module 303.

The establishing module 301 is configured to establish synchronous browsing sessions with terminals performing synchronous browsing.

The acquiring module 302 is configured to, when received, from any of the terminals performing synchronous browsing, a request for clicking any picture, find an identity pre-allocated to the any picture, where the any picture is pre-stored by the terminals performing synchronous browsing.

The sending module 303 is configured to send the identity of the picture to terminals other than the terminal clicking the picture, so that the terminals other than the terminal clicking the picture extract and display the corresponding picture according to the identity of the picture.

The functions jointly completed by the establishing module, the acquiring module, and the sending module in this embodiment may also be completed independently by the session controlling module in the method embodiment.

Referring to FIG. 8, the terminals performing synchronous browsing include a first terminal and a second terminal. The establishing module 301 includes:
a receiving unit 301a, configured to receive a session connection initiated by the first terminal to establish a session with the first terminal; and
a sending unit 301b, configured to send a synchronous browsing invitation to the second terminal according to an identity number of the second terminal that is input by the first terminal, to establish a session with the second terminal.

Referring to FIG. 8, the server provided by this embodiment also includes:
a service controlling module 304, configured to, before establishing a synchronous browsing session with terminals performing synchronous browsing, acquire picture information uploaded by the terminal, and allocate an identity to the picture; store the picture information and the identity of the picture; deliver a downloading task notification to terminals performing synchronous browsing with the terminal, so that the terminals performing synchronous browsing download and store the picture information and the identity of the picture.

The service controlling module 304 includes:
a receiving unit, configured to receive, from a user of the terminal, a request for logging in to a portal; and receive, through the portal, the picture information uploaded by the terminal.

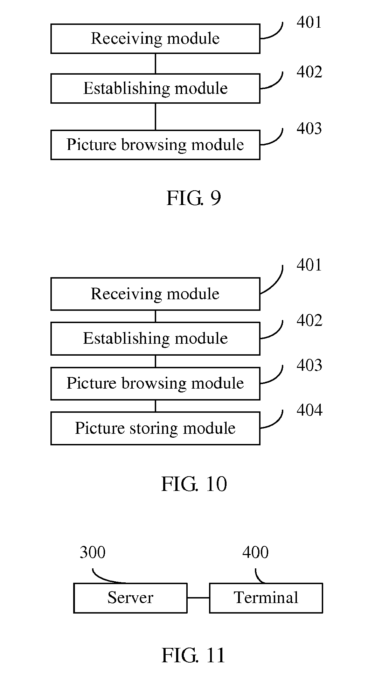

Referring to FIG. 9, an embodiment of the present invention also provides a terminal, including: a receiving module 401, an establishing module 402, and a picture browsing module 403.

The receiving module 401 is configured to receive a synchronous browsing invitation that is sent by a server according to a request from a terminal intending to establish synchronous browsing.

The establishing module 402 is configured to, after receiving the synchronous browsing invitation, enable the general packet radio service GPRS, and establish a synchronous browsing session with the server.

The picture browsing module 403 is configured to receive a picture identity notified by the server, and extract and display a pre-stored picture according to the identity.

Referring to FIG. 10, the terminal provided by this embodiment also includes:
a picture storing module 404, configured to receive a picture downloading task notification delivered by the server to download picture information and the identity of the picture.

Optionally, the terminals provided by this embodiment include: a computer, a wireless digital photo frame, a smart phone, and an interactive TV set top box.

The beneficial effect of the apparatus embodiment provided by the present invention is as follows: There is no space limitation, and the synchronous browsing of a picture between multiple terminals and a designated wireless digital photo frame may be implemented through a digital photo frame server, thereby enriching people's life and enhancing the user experience.

Referring to FIG. 11, an embodiment of the present invention also provides a system for displaying picture, including: the server 300 and the terminal 400 as described above.

The beneficial effect of the system embodiment provided by the present invention is as follows: There is no space limitation, and the synchronous browsing of a picture between multiple terminals and a designated wireless digital photo frame may be implemented through a digital photo frame server, thereby enriching people's life and enhancing the user experience.

The apparatus and system provided by the embodiments may specifically belong to the same idea as the method embodiment. For the specific implementation of the apparatus and system, reference can be made to the method embodiment, and details are not repeatedly described herein.

All or part of the foregoing technical solutions provided by the embodiments of the present invention may be implemented by a program instructing relevant hardware. The program may be stored in a readable storage medium, which includes a ROM, a RAM, a magnetic disk, a CD-ROM, and any other medium that may store program codes.

The above are merely about exemplary embodiments of the present invention, but not intended to limit the present invention. Any modification, equivalent substitution, and improvement made on the basis of the spirit and principle of the present invention shall fall within the protection scope of the present invention.

## Claims

1. A method for displaying picture, comprising:
establishing synchronous browsing sessions with terminals performing synchronous browsing;
when receiving, from any of the terminals performing the synchronous browsing, a request for clicking any picture, searching for a pre-stored identity allocated to the any picture, wherein the any picture is pre-stored by the terminals performing synchronous browsing; and
sending the identity of the any picture to the terminals other than the terminal clicking the any picture, so that the terminals other than the terminal clicking the any picture extract and display a corresponding picture according to the identity of the any picture.

2. The method according to claim 1, wherein the terminals performing the synchronous browsing comprise a first terminal and a second terminal, and the establishing the synchronous browsing sessions with the terminals performing synchronous browsing comprises:
receiving a session connection initiated by the first terminal to establish a session with the first terminal; and
sending a synchronous browsing invitation to the second terminal according to an identity number of the second terminal that is input by the first terminal, to establish a session with the second terminal.

3. The method according to claim 1, wherein before the establishing the synchronous browsing sessions with the terminals performing synchronous browsing, the method further comprises:
acquiring picture information sent by a terminal and allocating one identity to each of pictures;
storing the picture information and the identities of the pictures; and
delivering a downloading task notification to the terminals performing synchronous browsing with the terminal, so that the terminals performing synchronous browsing download and store the picture information and the identities of the pictures.

4. The method according to claim 3, wherein the acquiring the picture information sent by the terminal comprises:
receiving, from a user of the terminal, a request for logging in to a portal; and
receiving, through the portal, the picture information uploaded by the terminal.

5. A server, comprising:
an establishing module, configured to establish synchronous browsing sessions with terminals performing synchronous browsing;
an acquiring module, configured to, when receiving, from any of the terminals performing the synchronous browsing, a request for clicking any picture, search for an identity pre-allocated to the any picture, wherein the any picture is pre-stored by the terminals performing synchronous browsing; and
a sending module, configured to send the identity of the any picture to the terminals other than the terminal clicking the any picture, so that the terminals other than the terminal clicking the any picture extract and display a corresponding picture according to the identity of the any picture.

6. The server according to claim 5, wherein the terminals performing synchronous browsing comprise a first terminal and a second terminal, and the establishing module comprises:
a receiving unit, configured to receive a session connection initiated by the first terminal to establish a session with the first terminal; and
a sending unit, configured to send a synchronous browsing invitation to the second terminal according to an identity number of the second terminal that is input by the first terminal, to establish a session with the second terminal.

7. The server according to claim 5, further comprising:
a service controlling module, configured to, before establishing the synchronous browsing sessions with the terminals performing synchronous browsing, acquire picture information uploaded by the terminal, and allocate one identity to each of pictures, store the picture information and the identities of the pictures; deliver downloading task notifications to the terminals performing synchronous browsing with the terminal, so that the terminals performing synchronous browsing download and store the picture information and the identities of the pictures.

8. The server according to claim 7, wherein the service controlling module comprises:
a receiving unit, configured to receive, from a user of the terminal, a request for logging in to a portal; and receive, through the portal, the picture information uploaded by the terminal.

9. A terminal, comprising:
a receiving module, configured to receive a synchronous browsing invitation that is sent by a server according to a request from a terminal intending to establish synchronous browsing;
an establishing module, configured to, after the synchronous browsing invitation is received, enable a general packet radio service GPRS, and establish a synchronous browsing session with the server; and
a picture browsing module, configured to receive an identity of a picture notified by the server, and extract and display a pre-stored picture according to the identity.

10. The terminal according to claim 9, further comprising:
a picture storing module, configured to receive a picture downloading task notification delivered by the server to download picture information and identities of pictures.

11. The terminal according to claim 9, comprising: a computer, a wireless digital photo frame, a smart phone, and an interactive TV set top box.

12. A system for displaying picture, comprising: the server according to any one of claim 5 to 8 and the terminal according to any one of claim 9 to 11.
